# EUROPÄISCHE PATENTANMELDUNG

(11) **EP 2 360 009 A2**
(43) Veröffentlichungstag der Anmeldung: **24.08.2011**
(21) Anmeldenummer: 11001167.3
(22) Anmeldetag: 14.02.2011
(51) Int. Cl.: B29C 65/18, B65D 75/36

(54) **Siegelvorrichtung mit einem Sensorelement in einer Öffnung der Heizplatte**

(30) Priorität: 17.02.2010 DE 102010008390
(71) Anmelder: HAGMANN Maschinenbau AG, 2545 Selzach (CH)
(72) Erfinder: Tschaggelar, Markus, 4532 Felbrunnen (CH); Hagmann, Peter, 2545 Selzach (CH)
(74) Vertreter: Arat, Dogan

(57) **Zusammenfassung**

Siegelvorrichtung, insbesondere zum Versiegeln von Blisterverpackungen, mit einer Heizplatte (1) zur Aufnahme einer Siegelplatte (2), wobei die Heizplatte (1) ein Sensorelement umfasst, wobei das Sensorelement (4) in einer Siegelplatten-seitigen Öffnung der Heizplatte (1) angeordnet ist.

## Beschreibung

### Gebiet der Erfindung

Die Erfindung betrifft eine Siegelvorrichtung nach dem Oberbegriff des Anspruchs 1, eine Siegelplatte nach Anspruch 11 und eine Abstützung nach Anspruch 12.

### Stand der Technik

Aus dem Stand der Technik sind Siegelvorrichtungen zum Versiegeln von Blisterverpackungen bekannt, bei denen eine Heizplatte zur Aufnahme einer Siegelplatte ausgebildet ist. Diese Siegelplatte wird üblicherweise von oben gegen die Blisterverpackung gedrückt, nachdem zuvor die Siegelplatte an der Heizplatte befestigt wurde und aufgewärmt wurde. Auf diese Weise ist es möglich, mit der Siegelplatte die Blisterverpackung zu versiegeln. Dabei drückt die Siegelplatte gegen ein unteres Werkzeug, welches als Gegenstück für den Versiegelungsvorgang dient.

Aus dem Stand der Technik ist bekannt, in der Heizplatte ein Sensorelement anzuordnen, welches die Temperatur der Heizplatte misst. Nach einer ausreichend langen Zeitspanne, in welcher sich die Temperatur der Heizplatte nicht mehr verändert, wird dann angenommen, dass die Siegelplatte auch die entsprechende erforderliche Temperatur für das Versiegeln erreicht hat. Diese Prozedur ist langwierig, wobei dies insbesondere bei häufigem Wechsel der Siegelplatte für verschiedene Blisterverpackungen als nachteilig empfunden wird.

Ein weiterer Nachteil herkömmlicher Siegelvorrichtungen ist, dass keine Kontrolle darüber besteht, ob die richtige Siegelplatte für die als nächstes zu bearbeitende Blisterverpackung an der Heizplatte angeordnet wurde. Dies ist insbesondere deshalb problematisch, da Siegelvorrichtungen häufig mit einer Heizplatte ausgerüstet sind, welche von oben gegen die Blisterverpackung gefahren werden, wobei jedoch die Heizplatte derart niedrig angeordnet ist, dass ein Überprüfen, ob die richtige Siegelplatte angeordnet ist, ein Bücken des Bedieners erfordert. Auch dies wird als nachteilig angesehen.

### Offenbarung der Erfindung

Aufgabe der Erfindung ist es, aus dem Stand der Technik bekannte Siegelvorrichtungen zu verbessern, wobei insbesondere die Bedienung erleichtert oder automatisiert werden soll oder die Prozessgeschwindigkeit beim Versiegeln von Blisterverpackungen beschleunigt werden soll.

Zur Lösung der oben genannten Aufgabe dient eine Siegelvorrichtung nach Anspruch 1.

Die Heizplatte der erfindungsgemäßen Siegelvorrichtung weist ein Sensorelement auf, das in einer siegelplattenseitigen Öffnung der Heizplatte angeordnet ist. Auf diese Weise wird die Möglichkeit für das Sensorelement geschaffen, Parameter der Siegelplatte zu erfassen. Dabei bedeutet siegelplattenseitig, dass das Sensorelement in einer Öffnung angeordnet ist, welche in Richtung einer aufzunehmenden Siegelplatte geöffnet ist. Vorteilhafte Ausführungsformen weisen ein Sensorelement auf, das bei nicht angeordneter Siegelplatte aus der Öffnung der Heizplatte hervortritt. Dies bietet den Vorteil, dass sichergestellt werden kann, dass ein Kontakt zu dem Sensorelement und der Siegelplatte hergestellt werden kann. Außerdem ist es auf diese Weise möglich, an der Stellung des Sensorelementes zu erkennen, ob eine Siegelplatte angeordnet ist und gegebenenfalls auch, welche Art von Siegelplatte angeordnet ist.

Vorzugsweise ist das Sensorelement zumindest teilweise von einer Isolierung umgeben. Die Isolierung zwischen Sensorelement und Heizplatte schützt das Sensorelement.

Vorteilhafterweise umfasst das Sensorelement eine Feder oder es ist dem Sensorelement eine Feder zugeordnet, wobei die Feder angeordnet ist, um eine Spitze des Sensorelements Feder-belastet gegenüber einer Oberfläche der Heizplatte hervorzudrücken. Dabei ist die Oberfläche der Heizplatte die siegelplattenseitige Oberfläche der Heizplatte. Die Feder bietet den Vorteil, dass das Sensorelement bei Aufnahme der Siegelplatte in die Heizplatte hineingedrückt werden kann und gleichzeitig ein Kontakt zwischen dem Sensorelement oder der Spitze des Sensorelements und der Siegelplatte gewährleistet ist.

Vorteilhafte Ausführungsformen der Erfindung umfassen zumindest ein Sensorelement mit einem Temperaturfühler. Der Temperaturfühler ist vorzugsweise an der Spitze des Sensorelements angeordnet. Dies bietet die Möglichkeit, die Temperatur der Siegelplatte zu messen. Auf diese Weise kann die Aufheizzeit verkürzt werden, da die Temperatur der Siegelplatte direkt gemessen wird und deshalb nicht wie bisher lange gewartet werden muss.

Vorteilhafterweise umfasst die Heizplatte eine Mehrzahl von Sensorelementen mit jeweils einem Temperaturfühler. Besonders bevorzugt wird, falls eine Mehrzahl von Sensorelementen Temperaturfühler umfasst, wobei die Sensorelemente vorzugsweise paarweise angeordnet sind. Auf diese Weise kann jeweils ein Sensorelement für eine Steuerung oder Regelung einer Heizung oder mehrerer Heizungen der Heizplatte verwendet werden und das andere der Sensorelemente wird verwendet, um die Messdaten des ersten Sensorelements zu überprüfen. Vorzugsweise wird bei einer Abweichung der Messergebnisse, welche größer ist als eine vorher festgelegte Schwelle, beispielsweise 1%, 2% oder 5% der gemessenen Temperatur in Kelvin, ein Fehler angezeigt oder das entsprechende Messergebnis verworfen.

Vorteilhafterweise umfasst die Heizplatte eine Mehrzahl von Heizschlangen, wobei die Temperaturfühler der Sensorelemente mit einer Kontrolleinheit verbunden sind, die eingerichtet ist, in Abhängigkeit der Ausgangssignale der Temperaturfühler die Heizschlangen anzusteuern.

Besonders bevorzugt wird, falls die Heizschlangen unabhängig voneinander angesteuert werden. Dies bietet den Vorteil, dass die Heizplatte und damit auch die Siegelplatte gleichmäßig erwärmt werden kann und gegebenenfalls auch eine Aufheizgeschwindigkeit erhöht werden kann. Vorteilhafte Ausführungsformen sehen eine Interpolation der Messergebnisse der Temperaturfühler in der Kontrolleinheit vor, um die Regelung der Heizschlangen zu verbessern.

Bei vorteilhaften Ausführungsformen der Erfindung umfasst das Sensorelement einen Schalter, der angeordnet ist, sodass sein Zustand davon abhängt, ob das Sensorelement in die Heizplatte zumindest teilweise eingeschoben ist. Eine weitere vorteilhafte Möglichkeit ist, das Sensorelement derart anzuordnen, dass der Schalter betätigt wird, falls das Sensorelement mit einem Bereich einer aufzunehmenden Siegelplatte in Kontakt kommt oder von einer aufzunehmenden Siegelplatte verschoben wird. Auf diese Weise kann eine Siegelplattenerkennung geschaffen werden, welche wärmebeständig ist. Hintergrund ist, dass viele automatisierte Erkennungsverfahren bei der Aufnahme der Siegelplatte nicht anwendbar sind, da beispielsweise RFID-Chips zu wärmeempfindlich sind.

Vorteilhafterweise weist die Siegelvorrichtung erste Sensorelemente und zweite Sensorelemente auf, wobei die ersten Sensorelemente wie oben ausgeführt Temperaturfühler umfassen, die zweiten Sensorelemente Schalter umfassen. Typische Ausführungsformen können auch kombinierte Sensorelemente mit Temperaturfühler und Schalter umfassen. Mit den zwei Typen Sensorelementen lässt sich die Siegelvorrichtung verbessern, um die Aufheizgeschwindigkeit zu beschleunigen und außerdem Prozesssicherheit und Zuverlässigkeit zu erhöhen. Bevorzugte Ausführungsmerkmale, welche auf beide Typen von Sensorelementen verwendbar sind, wie beispielsweise das Anordnen einer Feder, können bei beiden Typen von Sensorelementen unabhängig voneinander angeordnet werden. Die Sensorelemente, welche einen Schalter umfassen, haben vorzugsweise einen Stift, welcher durch die Feder federnd gelagert ist. Bei Anlegen der Siegelplatte an der Heizplatte wird, falls der entsprechende Bereich der Siegelplatte das Sensorelement erfasst, der Stift gegen die Federkraft eingeschoben und der Schalter betätigt.

Vorteilhafterweise umfasst die Heizplatte eine Mehrzahl von Sensorelementen jeweils mit einem Schalter, wobei die Schalter mit einer Kontrolleinheit verbunden sind, die eingerichtet ist, in Abhängigkeit der Zustände der Schalter den Typ der an der Heizplatte angeordneten Siegelplatte zu erkennen. Besonders bevorzugt umfasst die Heizplatte zumindest sechs Schalter, mit welchen 63 Varianten von Siegelplatten durch eine binäre Codierung erkannt werden können. So können durch Öffnungen oder Löcher in der Siegelplatte an den entsprechenden Stellen der Sensorelemente mit Schalter Betätigungsmuster für die Schalter geschaffen werden, welche je nach verwendeter Siegelplatte unterschiedlich sind. Auf diese Weise ist es möglich, zu erkennen, ob eine richtige Siegelplatte angeordnet ist.

Vorzugsweise werden Heizschlangen der Heizplatte nicht beheizt, falls die Überprüfung der Zustände der Schalter durch die Kontrolleinheit ergibt, dass nicht eine geforderte Siegelplatte angeordnet ist. Eine solche Erkennung ist vorzugsweise mit einer Werkzeug-Erkennung für ein unteres Werkzeug verknüpft. Eine solche Werkzeug-Erkennung für ein unteres Werkzeug, welches das Gegenstück für die Siegelplatte bildet, kann beispielsweise ein RFID-Chip sein, welcher an dem unteren Werkzeug angeordnet ist und von der Siegelvorrichtung mit einem RFID-Modul bei Einlegen des unteren Werkzeugs erkannt wird. Vorteilhafterweise wird ein Fehler ausgegeben, falls die Werkzeug-Erkennung oder die Siegelplatten-Erkennung mit den Schaltern der Sensorelemente ein Ergebnis liefert, das nicht mit einem erwarteten, beispielsweise abgespeicherten Ergebnis übereinstimmt.

Vorzugsweise umfasst die Siegelvorrichtung eine untere Aufnahme für das untere Werkzeug und für eine Abstützung des unteren Werkzeugs, wobei ein Code-Lesesystem vorgesehen ist, welches mit einer Kontrolleinheit verbunden ist, wobei die Kontrolleinheit eingerichtet ist, um in Abhängigkeit des Ausgangssignals des Code-Lesesystems den Typ der Abstützung zu erkennen. Hintergrund ist, dass moderne untere Werkzeuge derart schlank ausgeführt werden, dass sie leicht von einem Bediener getragen oder gehoben werden können. Dies dient der Arbeitsergonomie. Um zu erreichen, dass das untere Werkzeug gleichwohl die Stabilitätsanforderungen für den Siegelvorgang der Blister-Verpackung erfüllt, wird eine Abstützung unter dem unteren Werkzeug vorgesehen, um das untere Werkzeug in der unteren Aufnahme aufzunehmen. Je nach unterem Werkzeug sind diese Abstützungen unterschiedlich ausgebildet. Um ein Einsetzen einer falschen Abstützung für ein unteres Werkzeug zu verhindern, wird das bevorzugte Code-Lesesystem eingesetzt. Das Code-Lesesystem ist bevorzugt wiederum mit der Kontrolleinheit verbunden, wobei vorzugsweise die Kontrolleinheit überprüft, ob die Abstützung, das untere Werkzeug und die Siegelplatte zueinander passen. Nur falls dies der Fall ist, wird von der Kontrolleinheit die Siegelvorrichtung frei gegeben, also beispielsweise die Heizung oder die Heizschlangen der Heizplatte in Betrieb genommen. Ansonsten wird ein Fehler ausgegeben. Dies dient der Zuverlässigkeit und der Sicherheit der Siegelvorrichtung.

Vorzugsweise umfasst das Code-Lesesystem einen Magnetsensor. Magnetsensoren bieten den Vorteil, dass sie einfach und billig sind. Außerdem sind Magnetsensoren robust.

Ein unabhängiger Aspekt der Erfindung betrifft eine Abstützung einer entsprechenden Siegelvorrichtung, wobei die Abstützung zumindest einen Magneten umfasst, welcher mit dem zumindest einen Magnetsensor des Code-Lesesystems zusammen arbeitet. Besonders bevorzugt weist das Code-Lesesystem mehrere Magnetsensoren und die Abstützung dementsprechend mehrere mögliche Stellen auf, an denen Magneten vorgesehen sein können, mit dem Magnetsensor zu interagieren. Auf diese Weise können wiederum verschiedene Abstützungen durch die Kontrolleinheit identifiziert werden.

Vorzugsweise umfasst die Siegelvorrichtung eine mit der Kontrolleinheit verbundene Speichereinrichtung, wobei die Kontrolleinheit eingerichtet ist, in Abhängigkeit eines Vergleichs von Signalen des Code-Lesesystems, von Signalen der Schalter und von in dem Speicher abgelegten Informationen einen Betrieb der Siegelvorrichtung zu steuern oder zu regeln. Insbesondere wird bevorzugt, dass die Kontrolleinheit dazu eingerichtet ist, den Betrieb der Siegelvorrichtung zu sperren, falls die entsprechenden Signale nicht eine Übereinstimmung ergeben.

Ein unabhängiger Aspekt der Erfindung betrifft eine Siegelplatte für eine erfindungsgemäße Siegelvorrichtung, wobei die Siegelplatte vorzugsweise zumindest eine Öffnung oder ein Loch umfasst, welches an einer Stelle der Siegelplatte angeordnet ist, die bei Aufnahme der Siegelplatte an der Heizplatte an der Stelle eines Sensorelementes mit einem Schalter zu liegen kommt. Eine solche Siegelplatte bietet den Vorteil, automatisch erkennbar zu sein.

### Kurze Beschreibung der Zeichnungen

Die Erfindung wird nachfolgend anhand bevorzugter Ausführungsbeispiele näher erläutert, wobei die Figuren zeigen:
- Fig. 1: zeigt Einzelheiten einer bevorzugten Ausführungsform einer Siegelvorrichtung in einer schematischen Ansicht;
- Fig. 2: zeigt eine weitere Einzelheit der bevorzugten Ausführungsform der Fig. 1 in einer weiteren schematischen Ansicht; und
- Fig. 3: zeigt schematisch die Anordnung verschiedener Sensorelemente der bevorzugten Ausführungsform in der Heizplatte.

### Beschreibung eines bevorzugten Ausführungsbeispiels

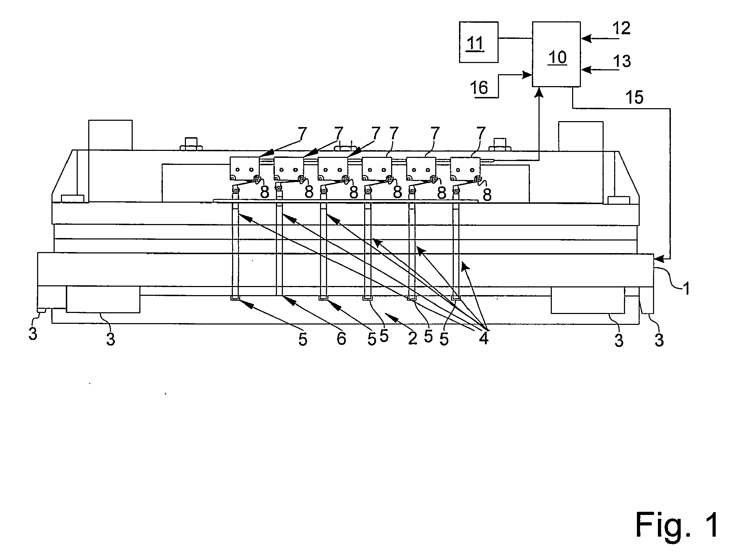

In den Figuren 1, 2 und 3 sind Einzelheiten einer bevorzugten Siegelvorrichtung in schematischen Ansichten gezeigt. In den Figuren sind jeweils Schnitte von Heizplatten und Siegelplatten gezeigt. Die Figuren 1, 2 und 3 werden gemeinsam beschrieben, wobei gleiche Bezugszeichen gleiche oder ähnliche Teile bezeichnen.

Die bevorzugte Siegelvorrichtung ist zum Versiegeln von Blister-Verpackungen geeignet und verfügt neben der dargestellten Heizplatte noch über einen Rahmen, in welchem die Heizplatte angeordnet ist (nicht dargestellt), und eine untere Aufnahme für ein unteres Werkzeugteil zusammen mit einer Abstützung. Diese Teile gehören wie zuvor beschrieben zu der bevorzugten Ausführungsform, sind jedoch in den Figuren nicht dargestellt.

In der Fig. 1 ist ein Schnitt durch eine Heizplatte 1 dargestellt, welche eine Aufnahme für eine Siegelplatte 2 umfasst, wobei die Aufnahme unter anderem durch seitliche Einfassungen 3 gebildet wird. Weiterhin sind Befestigungsmöglichkeiten für die Siegelplatte 2 an der Heizplatte 1 vorgesehen, die hier jedoch nicht dargestellt sind. Die Siegelplatte 2 weist in der Fig. 1 nicht dargestellte Oberflächenstrukturen auf, welche dazu dienen, in einem aufgeheizten Zustand der Siegelplatte 2 Blister-Verpackungen zu versiegeln.

In der Fig. 1 sind sechs Sensorelemente im Schnitt dargestellt, welche dazu dienen, den Typ der Siegelplatte 2 zu erfassen. Dabei weist die Siegelplatte 2 Codierungsstellen 5 auf, die jeweils vertieft sind. Weiterhin weist die Siegelplatte 2 eine Codierungsstelle 6 auf, welche nicht vertieft ist. Andere Siegelplatten für bevorzugte Ausführungsformen der Siegelvorrichtung weisen andere Kombinationen von vertieften und nicht vertieften Codierungsstellen 5 und 6 auf, sodass durch Abtasten der Codierungsstellen 5 und 6 der Typ der Siegelplatte 2 erkannt werden kann.

Das Abtasten der Codierungsstellen 5 und 6 geschieht mit den Sensorelementen 4. Die Sensorelemente 4 weisen hierzu Feder-belastete Stifte auf, welche bei eingebauter Siegelplatte 2 gegen die Siegelplatte 2 drücken oder in den Vertiefungen der Codierungsstellen 5 aufgenommen werden. Auf diese Weise kann über Schalter 7, welche mit den Stiften verbunden sind, erfasst werden, ob ein Stift eines der Sensorelemente 4 eingedrückt wird oder nicht. Die Schalter 7 weisen auch jeweils Federn 8 auf, welche die Andrückkraft für die Stifte der Sensorelemente 4 bereitstellen. Die Ausgangssignale der Schalter 7 bilden einen binären Code für den Typ der angebrachten Siegelplatte 2, wobei dieser Code an eine zentrale Kontrolleinheit 10 übermittelt wird oder von dieser abgefragt wird.

Die Kontrolleinheit 10 ist dazu eingerichtet, den von dem Schalter 7 erhaltenen binären Code der Siegelplatte 2 mit weiteren Eingangssignalen und in einem Speicher 11 hinterlegten Daten für Typen von Siegelplatten und anderen Werkzeugen zu vergleichen. So verfügt die Kontrolleinheit über einen Eingang 12, über welchen RFID-Signale eines RFID-Lesegeräts abgefragt werden, welches in der unteren Aufnahme der Siegelvorrichtung angeordnet ist. Dieses RFID-Lesegerät ist dazu vorgesehen, mit RFID-Chips, welche an dem jeweiligen unteren Werkzeug angeordnet sind, zusammenzuwirken, um den Typ dieses unteren Werkzeugs festzustellen. Weiter ist ein Eingang 13 der Kontrolleinheit 10 vorgesehen, welcher mit dem Code-Lesesystem verbunden ist, das sechs Magnetsensoren umfasst. Diese sechs Magnetsensoren sind angeordnet, um bei eingesetzter Abstützung Magnete der Abstützung zu erfassen, welche wiederum über eine binäre Codierung den Typ der Abstützung identifizierbar machen.

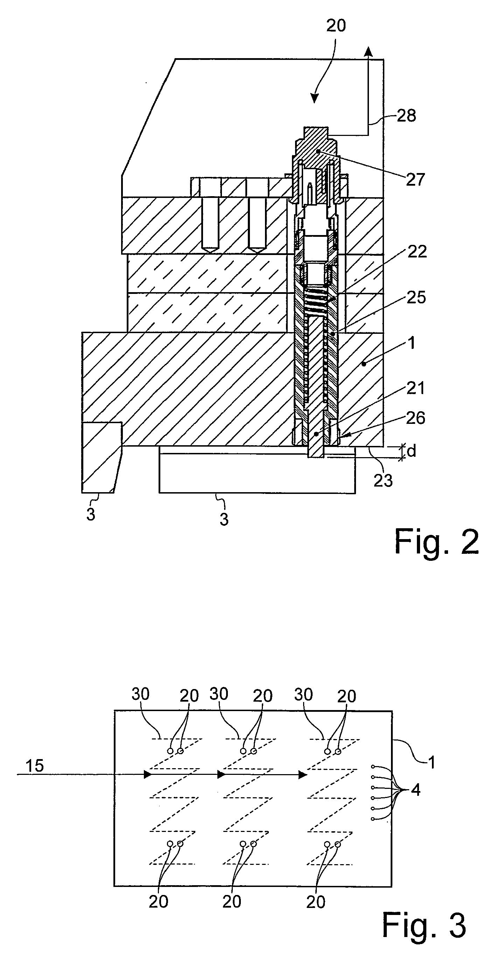

Auf diese Weise ist die Kontrolleinheit 10 in der Lage zu überprüfen, ob der Typ der Siegelplatte 2, der Typ des unteren Werkzeugs, welcher über den Signaleingang 12 identifizierbar ist, und der Typ der Abstützung, welche über den Eingang 13 identifizierbar ist, zusammenpassen. Erst bei einer Feststellung dahingehend, dass diese Typen zusammenpassen und mit in dem Speicher 11 abgelegten Informationen übereinstimmen, wird über eine Steuerleitung 5 eine Heizung, welche drei Heizschlangen in der Heizplatte 1 umfasst, freigegeben. Ebenso wird über die Steuerleitung 15 jede einzelne der drei Heizschlangen in Abhängigkeit von den Temperatursignalen, welche über einen Eingang 16 erfasst werden, einzeln geregelt. Die über den Eingang 16 anliegenden Signale werden im Zusammenhang mit der Fig. 2 näher erläutert.

In der Fig. 2 ist ein zweiter Typ eines Sensorelements 20 gezeigt, wobei das Sensorelement 20 dazu dient, eine Temperatur der Siegelplatte 2 (in der Fig. 2 nicht dargestellt) direkt zu erfassen. Hierzu weist das Sensorelement 20 einen Temperaturfühler 21 auf.

Typische Ausführungsformen der Erfindung verwenden einen Temperaturfühler vom Typ PT-100. Es ist jedoch auch möglich, andere Typen von Temperaturfühlern zu verwenden, beispielsweise falls höhere Genauigkeiten gewünscht werden.

Der Temperaturfühler 21 wird mit einer Feder 22 gegenüber einer Oberfläche 23 der Heizplatte 1 um einen Abstand d herausgedrückt. Bei Aufnahme der Siegelplatte 2 (Fig. 1) an der Heizplatte 1, wird der Temperaturfühler 21 gegen die Kraft der Feder 22 eingedrückt, sodass die Spitze 24 des Temperaturfühlers 21 gegen die Siegelplatte 2 drückt. Der Temperaturfühler ist mit einer Isolation 25 gegenüber der Heizplatte 1 isoliert, um die Temperaturmessung des Temperaturfühlers 21 möglichst nicht zu verfälschen und um den Temperaturfühler zu schützen. Montiert ist das Sensorelement 20 in der Heizplatte 1 mit einer Befestigungsschraube 26. Zur Verbindung mit der Kontrolleinheit 10 (Fig. 1) weist das Sensorelement 20 einen Stecker 27 auf, welcher dazu dient, Signale des Temperaturfühlers 26 zu einer Leitung 28 zu übertragen, welche mit dem Eingang 16 (Fig. 1) der Kontrolleinheit 10 verbunden ist.

Bevorzugte Ausführungsformen wie die in den Figuren 1 und 2 gezeigte bevorzugte Ausführungsform einer Siegelvorrichtung weisen paarweise angeordnete Sensorelemente 20 auf, die jeweils beide mit der Kontrolleinheit 10 verbunden sind. Die Kontrolleinheit 10 kann dadurch die richtige Funktion der Sensorelemente 20 überprüfen, indem jeweils die Ausgangssignale von zwei benachbarten Sensorelementen 20, die bevorzugt weniger als 50 mm auseinander liegen, verglichen werden, um festzustellen, ob eins der Sensorelemente ausgefallen ist. In diesem Fall wird ein Fehler über die Kontrolleinheit 10 ausgegeben.

Es sollte noch angemerkt werden, dass der Abstand d bevorzugt mindestens 1 mm und bevorzugt weniger als 10 mm, noch bevorzugter mindestens 2 mm und weniger als 4 mm betragen soll, da auf diese Weise eine Beschädigung des Temperaturfühlers 21 weitgehend ausgeschlossen werden kann und außerdem sichergestellt werden kann, dass der Temperaturfühler 21 gegen die Siegelplatte 2 drückt. Besonders bevorzugt stehen die Sensorelemente weniger hervor als Einfassungen für die Siegelplatte, um die Sensorelemente zu schützen.

In der Fig. 3 ist schematisch die Anordnung der Sensorelemente 20 und der Sensorelemente 4 in der Heizplatte 1 dargestellt. Zu erkennen ist die paarweise Anordnung der Temperaturfühler 21, wobei die Temperaturfühler 21 jeweils in Endbereichen einer Heizschlange 30 angeordnet sind. Es sind drei Heizschlangen 30 in der Heizplatte 1 angeordnet, die durch die Kontrolleinheit 10 getrennt angesteuert werden können. Über die insgesamt 12 Sensorelemente 20 mit Temperaturfühlern können die Heizschlangen 30 einzeln geregelt werden. Am Rand der Heizplatte 1 sind sechs Sensorelemente 4 mit Schaltern zur Erfassung des Typs der angelegten Siegelplatte angeordnet.

Die Erfindung ist nicht auf das vorstehend beschriebene bevorzugte Ausführungsbeispiel beschränkt, vielmehr wird der Umfang durch die beiliegenden Ansprüche begrenzt.

## Patentansprüche

1. Siegelvorrichtung, insbesondere zum Versiegeln von Blisterverpackungen, mit einer Heizplatte (1) zur Aufnahme einer Siegelplatte (2), wobei die Heizplatte (1) ein Sensorelement umfasst,
**dadurch gekennzeichnet, dass**
das Sensorelement (4, 20) in einer Siegleplatten-seitigen Öffnung der Heizplatte (1) angeordnet ist.

2. Siegelvorrichtung nach Anspruch 1, **dadurch gekennzeichnet, dass** das Sensorelement (4, 20) eine Feder (8, 22) umfasst, welche angeordnet ist, um eine Spitze des Sensorelements (4, 20) Feder-belastet gegenüber einer Oberfläche (23) der Heizplatte (1) hervorzudrücken.

3. Siegelvorrichtung nach Anspruch 1 oder 2, **dadurch gekennzeichnet, dass** das Sensorelement (20) einen Temperaturfühler (21) umfasst.

4. Siegelvorrichtung nach einem der vorhergehenden Ansprüche, **dadurch gekennzeichnet, dass** die Heizplatte (1) eine Mehrzahl von Sensorelementen (20) mit jeweils einem Temperaturfühler (21) umfasst.

5. Siegelvorrichtung nach Anspruch 4, **dadurch gekennzeichnet, dass** die Heizplatte (1) eine Mehrzahl von Heizschlangen (30) umfasst, wobei die Temperaturfühler (21) mit einer Kontrolleinheit (10) verbunden sind, die eingerichtet ist, um in Abhängigkeit der Ausgangssignale der Temperaturfühler (21) die Heizschlangen (30) anzusteuern.

6. Siegelvorrichtung nach einem der vorhergehenden Ansprüche, **dadurch gekennzeichnet, dass** das Sensorelement (4) einen Schalter (7) umfasst, der angeordnet ist, so dass sein Zustand davon abhängt, ob das Sensorelement (4) in die Heizplatte (1) zumindest teilweise eingeschoben ist.

7. Siegelvorrichtung nach Anspruch 6, **dadurch gekennzeichnet, dass** die Heizplatte (1) eine Mehrzahl von Sensorelementen (4) jeweils mit einem Schalter (7) umfasst, wobei die Schalter (7) mit einer Kontrolleinheit (10) verbunden sind, die eingerichtet ist, um in Abhängigkeit der Zustände der Schalter (7) den Typ der an der Heizplatte (1) angeordneten Siegelplatte (2) zu erkennen.

8. Siegelvorrichtung nach einem der vorhergehenden Ansprüche, **gekennzeichnet durch** eine untere Aufnahme für ein unteres Werkzeug und für eine Abstützung des unteren Werkzeugs mit einem Codelesesystem, welches mit der Kontrolleinheit (10) verbunden ist, wobei die Kontrolleinheit (10) eingerichtet ist, in Abhängigkeit des Ausgangssignals des Codelesesystems den Typ der Abstützung zu erkennen.

9. Siegelvorrichtung nach Anspruch 8, **dadurch gekennzeichnet, dass** das Codelesesystem einen Magnetsensor umfasst.

10. Siegelvorrichtung nach einem der Ansprüche 6 bis 9, **gekennzeichnet durch** einen mit der Kontrolleinheit (10) verbundene Speichereinrichtung (11), wobei die Kontrolleinheit (10) eingerichtet ist, in Abhängigkeit eines Vergleichs von Signalen des Codelesesystems, von Signalen der Schalter (7) und von in dem Speicher abgelegten Informationen einen Betrieb der Siegelvorrichtung zu steuern.

11. Siegelplatte für eine Siegelvorrichtung nach einem der Ansprüche 6 bis 10 mit zumindest einer Vertiefung (5) oder einer Öffnung, welche angeordnet ist, um bei Aufnahme der Siegelplatte (2) in der Siegelvorrichtung einen Freiraum für ein Sensorelement (4) zu bilden.

12. Abstützung für eine Siegelvorrichtung nach einem der Ansprüche 9 oder 10 mit zumindest einem Magneten, der angeordnet ist, um bei einer Aufnahme der Abstützung in der Siegelvorrichtung mit dem Magnetsensor zusammenzuwirken.
